# DEMANDE DE BREVET EUROPEEN

(11) **EP 1 030 522 A1**
(43) Date de publication de la demande: **23.08.2000**
(21) Numéro de dépôt: 00200397.8
(22) Date de dépôt: 07.02.2000
(51) Int. Cl.: H04N 7/20, H04N 7/173

(54) **Procédé pour transmettre des signaux de retour vers un satellite à partir d'un réseau de distribution de signaux de vidéocommunication**

(30) Priorité: 16.02.1999 FR 9901871
(71) Demandeur: Koninklijke Philips Electronics N.V., 5621 BA Eindhoven (NL)
(72) Inventeur: Chanteau, Pierre, 75008 Paris (FR); Brajal, Américo, 75008 Paris (FR); Edouard, Reynald, 75008 Paris (FR)
(74) Mandataire: Chaffraix, Jean

(57) **Abrégé**

Un système d'antenne (1) émet des signaux remontants, par exemple en bande Ka, à partir de signaux reçus d'un réseau de distribution dans la bande 2,5-3 GHz. Les signaux remontants sont transmis au travers du réseau, depuis un récepteur d'usager (PC), avec une fréquence située en dessous de 65 MHz, ils sont traités dans un convertisseur de fréquence (up-C) entre le réseau et le système d'antenne, de façon à être délivrés au système d'antenne avec une fréquence située dans la bande 2,5-3 GHz, et des données de gestion des fréquences, reçues dans la voie descendante, sont exploitées dans le convertisseur de fréquence (up-C) pour choisir la fréquence dans la bande 2,5-3 GHz.

## Description

La présente invention concerne un procédé pour transmettre des signaux dits de retour à partir d'un réseau de distribution de signaux de vidéocommunication, comprenant un système d'antenne capable d'émettre des signaux dits de retour vers un satellite dans une première bande de fréquences, à partir de signaux reçus depuis le réseau dans une deuxième bande de fréquence située en haut de la bande des fréquences de télévision utilisée dans le réseau, procédé dans lequel des signaux comprenant entre autres des données pour la gestion des fréquences des signaux de retour sont reçus dans une voie dite descendante destinée à desservir une pluralité de récepteurs d'usager.

Elle concerne aussi un réseau de distribution de signaux de vidéocommunication, comprenant un système d'antenne capable d'émettre des signaux dits de retour vers un satellite dans une première bande de fréquences, à partir de signaux reçus depuis le réseau dans une deuxième bande de fréquence située en haut de la bande des fréquences de télévision utilisée dans le réseau, et comprenant une voie dite descendante destinée à fournir des signaux à une pluralité de récepteurs d'usager et amenant, entre autres, des données pour la gestion des fréquences des signaux de retour.

Elle concerne en outre une unité destinée à servir d'interface entre un réseau de distribution de signaux de vidéocommunication et un récepteur d'usager, et une unité de transposition de fréquences destinée à servir d'interface entre un réseau de vidéocommunication et un système d'antenne.

Un tel procédé et de tels dispositifs sont prévus entre autres pour permettre le "télétravail" ou travail à domicile, utilisant une communication par satellite avec l'employeur. Ils peuvent également être utilisés dans tout type de télécommunication.

Un tel système d'antenne, associé à un récepteur d'usager, est connu du document "Description of an Interactive Satellite System based on the European ACTS ISIS project", dans ITU TELECOM Inter@ctive 97, Session GII.6. Selon ce document, des signaux en retour sont fournis à une fréquence intermédiaire "IF", connue de l'homme du métier comme étant comprise entre 2,5 et 3 GHz, et ils sont convertis en bande Ka (29.5-30 GHz) pour être émis vers le satellite.

Pour optimiser la remontée de données vers un satellite, l'attribution des canaux pour les signaux en retour est organisée de façon dynamique par l'opérateur, et des informations de positionnement en fréquence de l'émission en bande Ka sont transmises vers les utilisateurs dans le flux descendant, qui est amené à l'appareil utilisateur par un câble dit "de réception". Ce flux descendant est le flux normalisé DVB-S qui transporte dans des paquets MPEG2-TS à la fois des signaux de signalisation technique et des applications demandées par des usagers.

Un récepteur d'usager interactif utilise ces informations pour commander en fréquence un synthétiseur agile fournissant un signal de voie retour dont la fréquence centrale peut varier entre 2,5 et 3 GHz. Ce signal remonte du récepteur, par un autre câble que le câble de réception, vers l'émetteur en bande Ka, où une conversion prédéterminée le transpose entre 29.5 et 30 GHz. Cette conception, où l'agilité en fréquence est concentrée au niveau du récepteur, a essentiellement trois inconvénients dans un système SMATV:
- La nécessité d'utiliser deux câbles sur la totalité de la liaison entre l'antenne et le récepteur interactif;
- L'utilisation d'une bande de fréquence voie retour en câble coaxial de 2,5 à 3 GHz qui est en conflit avec la bande de fréquence 88 MHz à 3 GHz de la voie descendante des systèmes SMATV actuels;
- Une largeur de la bande en voie retour beaucoup plus importante que dans les voies retour classiques: 500 MHz à comparer aux 60 MHz de la voie retour normalisée en Europe qui s'étend au maximum de 5 à 65 MHz. La largeur de 500 MHz de cette bande de voie retour n'est justifiée que par la nécessité d'une agilité en fréquence de 500 MHz, c'est-à-dire la possibilité de changer la fréquence à tout moment à l'intérieur d'une bande de 500 MHz, alors que les débits utiles envisagés (quelques centaines de Kbits/s) sont infiniment moins gourmands en bande passante.

Un objet de l'invention est de permettre l'utilisation du procédé d'émission dans des réseaux de distribution collectifs en supprimant les inconvénients mentionnés ci-dessus. La bande passante utilisée pour transmettre les données en retour dans le réseau doit être plus réduite que 500 MHz et néanmoins une agilité finale pouvant aller jusqu'à 500 MHz est requise.

A cet effet, les signaux de retour sont transmis au travers du réseau, depuis un récepteur d'usager, avec une fréquence située en dessous de la bande des fréquences de télévision utilisée dans le réseau, ces signaux de retour sont soumis à une transposition de fréquence à la sortie du réseau vers le système d'antenne, de telle façon qu'ils soient délivrés au système d'antenne, pour y être émis, avec une fréquence située dans la deuxième bande de fréquences, et les données de gestion des fréquences, reçues dans la voie descendante, sont exploitées lors de la dite transposition de fréquence pour choisir la fréquence à fournir dans la deuxième bande de fréquences.

Un réseau de distribution de signaux de vidéocommunication selon l'invention comprend une unité dite complémentaire, jouant le rôle d'interface entre les éléments habituels du réseau et un récepteur d'usager, munie de premiers moyens pour recevoir depuis le réseau et délivrer au récepteur d'usager les signaux de la voie descendante et les données pour la gestion des fréquences, et pour transmettre, depuis un récepteur d'usager vers le réseau, des signaux de retour dont la fréquence est située en dessous de la bande des fréquences de télévision utilisée dans le réseau et des données pour la gestion des fréquences, une unité de transposition de fréquences, jouant le rôle d'interface entre les éléments habituels du réseau et le système d'antenne, munie de deuxièmes moyens pour recevoir des signaux de retour dont la fréquence est située en dessous de la bande des fréquences de télévision utilisée dans le réseau, pour soumettre ces signaux de retour à une transposition de fréquence qui les amène dans la deuxième bande de fréquence, et pour délivrer ces signaux de retour, après transposition, au système d'antenne pour être émis par ce système, et des troisièmes moyens pour transmettre à l'unité de transposition de fréquences des données pour la gestion des fréquences, reçues via le réseau, destinée à permettre aux deuxièmes moyens de choisir la fréquence à utiliser dans la deuxième bande de fréquence.

Une unité, destinée à servir d'interface entre un réseau de distribution de signaux de vidéocommunication et un récepteur d'usager, comprend des moyens pour recevoir depuis le réseau et délivrer au récepteur d'usager des signaux de voie descendante et des données pour la gestion de fréquences de retour, et pour transmettre, depuis le récepteur d'usager vers le réseau, des signaux de retour dont la fréquence est située en dessous de la bande des fréquences de télévision utilisée dans le réseau et des données pour la gestion des fréquences.

Une unité de transposition de fréquences, destinée à servir d'interface entre un réseau de vidéocommunication et un système d'antenne, est munie de moyens pour recevoir des signaux de retour dont la fréquence est située en dessous de la bande des fréquences de télévision utilisée dans le réseau, pour soumettre ces signaux de retour à une transposition de fréquence qui les amène dans une deuxième bande de fréquence située en haut de la bande des fréquences de télévision utilisée dans le réseau, et pour délivrer ces signaux de retour, après transposition, au système d'antenne pour être émis par ce système.

Des modes particuliers de réalisation de l'invention apparaissent dans les revendications dépendantes 2-5 et 7-11.

Ces aspects de l'invention ainsi que d'autres aspects plus détaillés apparaîtront plus clairement grâce à la description suivante d'un mode de réalisation constituant un exemple non limitatif.
La figure 1 est un schéma qui présente un réseau de distribution de signaux de vidéocommunication, comprenant un système d'antenne et relié à un récepteur d'usager.
La figure 2 présente plus en détail une liaison de données de commande entre une unité de transposition de fréquence et une unité complémentaire.

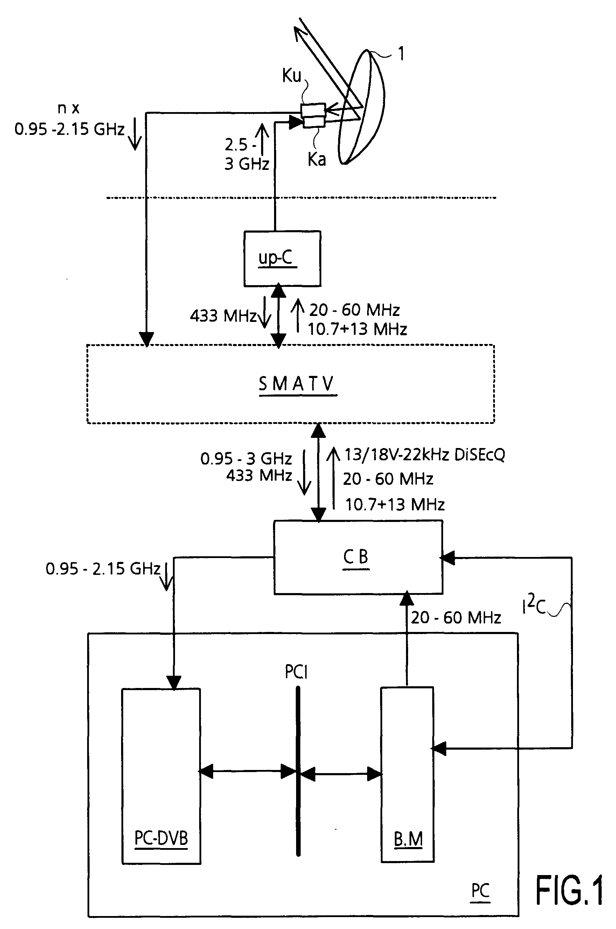

Dans le système de la figure 1, l'appareil récepteur d'usager, qui dialogue avec un émetteur, est un ordinateur personnel, par exemple de type dit "PC". Il est clair que l'invention s'appliquerait également à d'autres types d'appareils, par exemple à un décodeur de télévision numérique, utilisant les mêmes couches physiques et de contrôle d'accès.

Le système d'antenne comprend une parabole 1 au foyer de laquelle se trouve un convertisseur de réception traditionnel, par exemple pour des signaux MPEG2 DVB, en bande Ku (12 GHz). La voie retour est émise vers le satellite par un émetteur, situé pratiquement aussi au foyer de la parabole, qui envoie des signaux de voie retour, par exemple ici en bande Ka. Un signal de retour occupe une bande dont la largeur peut être comprise entre 100 kHz et 3 MHz. Il doit par exemple transmettre des signaux dont le débit est de 1 Mb/s.

L'agilité en fréquence, dans un système selon l'invention, est déportée en amont du réseau de distribution dans une unité up-C. Accessoirement, ce produit fournit aussi la télé alimentation de l'émetteur.

L'émission en bande Ka est effectuée selon un processus de partage de fréquence, et aussi de temps : chaque usager est autorisé à émettre dans une fenêtre de temps, cette fenêtre étant déterminée par l'opérateur de l'émission satellite et sa définition étant transmise sous la forme de données dans le flux descendant; à cet effet, l'opérateur doit connaître la liste des usagers qui sont groupés dans un même réseau de distribution collective "SMATV", car il ne doit pas attribuer la même fenêtre de temps à deux usagers de ce réseau, alors qu'il peut le faire pour deux usagers de réseaux SMATV différents.

Une unité dite complémentaire CB reçoit les données descendantes du câble de réception dans un canal qu'elle sélectionne dans la bande 88 MHz-3 GHz; les données descendantes ne sont pas en conflit avec les données de voie retour qui sont fournies par l'unité complémentaire CB dans une bande de fréquence 20-60 MHz, par exemple avec une fréquence centrale fixe, à 44 MHz. Une bande limitée à 20-60 MHz est choisie, bien que la bande 5-65 MHz soit disponible, afin de libérer de la place pour des signaux techniques de pilotage de l'émetteur.

L'ordinateur personnel PC comprend, entre autres:
- un modulateur/démodulateur d'impulsions B.M pour fournir, sous forme de signaux codés I²C, des données numériques à l'unité CB, ou en recevoir d'elle; cet élément B.M comprend un processeur capable de traiter les données de gestion des fréquences de retour, reçues dans la voie descendante, pour fournir au réseau des ordres qui en résultent.
- un récepteur d'émissions numériques vidéo PC-DVB qui reçoit et démodule des émissions vidéo numériques en provenance de cette même unité;
- une interface PCI prévue entre ces deux éléments.

Les signaux I²C, en plus des informations de fréquence, véhiculent des informations pour ajuster le niveau de puissance de l'émetteur en bande Ka.

Une modulation des informations I²C est réalisée dans l'unité complémentaire CB, pour permettre l'acheminement au travers du réseau.

Le canal à 44 MHz est transposé dans l'unité up-C en un canal, situé par exemple entre 2,5 et 3 GHz, c'est-à-dire en haut ou au dessus de la bande des fréquences de télévision utilisée dans le réseau. La fréquence dans ce canal est choisie en fonction des informations I²C fournies par l'unité complémentaire CB.

Le système transmet des signaux descendants, ici à 433 MHz, vers l'unité CB à partir de l'unité up-C, des signaux en retour à 10.7 et 13 MHz pour le contrôle de la transposition, ainsi que les habituels signaux 13/18V-22kHz DiSEcQ pour la commande de commutateurs SMATV.

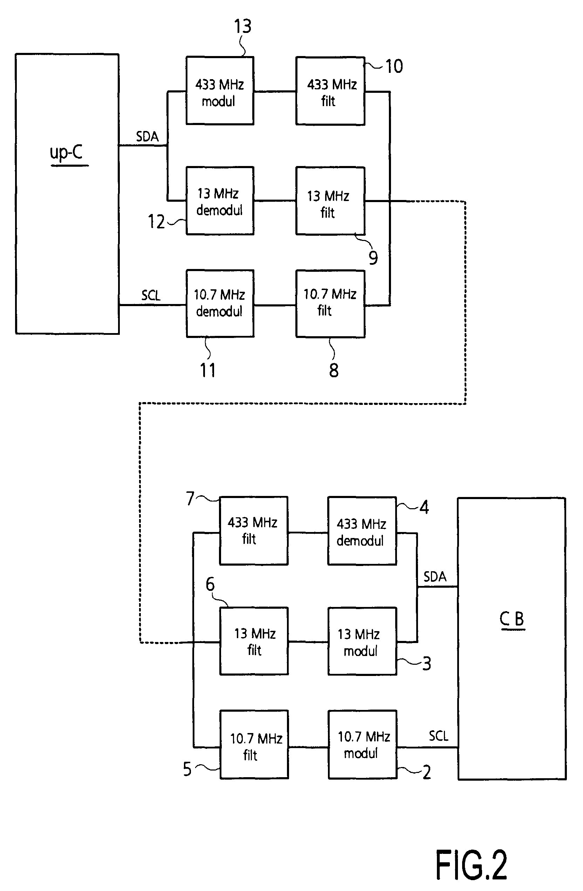

Sur la figure 2, l'unité complémentaire CB envoie, via le réseau symbolisé par une ligne en trait pointillé, des signaux d'horloge SCL, et il reçoit et envoie des signaux de données SDA. Les signaux d'horloge SCL, qui sont transmis en même temps que les données SDA, pendant les fenêtres de temps d'émission en retour, sont modulés à 10.7 MHz dans un modulateur 2 et filtrés dans un filtre passe-bande 5. Les signaux de données SDA envoyés sont modulés à 13 MHz dans un modulateur 3 et filtrés dans un filtre passe-bande 6. Les signaux de données SDA reçus sont filtrés à 433 MHz dans un filtre passe-bande 7 et démodulés dans un démodulateur 4.

L'unité up-C reçoit des signaux d'horloge SCL, et elle reçoit et envoie des signaux de données SDA. Les signaux d'horloge SCL traversent un filtre passe-bande 5 à 10.7 MHz et sont démodulés dans un démodulateur 11. Les signaux SDA reçus traversent un filtre passe-bande 9 à 13 MHz, et sont démodulés dans un démodulateur 12. Les signaux SDA envoyés sont modulés à 433 MHz dans un modulateur 13 et traversent un filtre passe-bande 10.

Il doit être compris que le verbe "comprendre" n'exclut pas la présence d'autres éléments ou étapes que celles listées dans une revendication.

## Revendications

1. Procédé pour transmettre des signaux dits de retour à partir d'un réseau de distribution de signaux de vidéocommunication, comprenant un système d'antenne capable d'émettre des signaux dits de retour vers un satellite dans une première bande de fréquences, à partir de signaux reçus depuis le réseau dans une deuxième bande de fréquence située en haut de la bande des fréquences de télévision utilisée dans le réseau, procédé dans lequel des signaux comprenant entre autres des données pour la gestion des fréquences des signaux de retour sont reçus dans une voie dite descendante destinée à desservir une pluralité de récepteurs d'usager, caractérisé en ce que:
- les signaux de retour sont transmis au travers du réseau, depuis un récepteur d'usager, avec une fréquence située en dessous de la bande des fréquences de télévision utilisée dans le réseau.
- ces signaux de retour sont soumis à une transposition de fréquence à la sortie du réseau vers le système d'antenne, de telle façon qu'ils soient délivrés au système d'antenne, pour y être émis, avec une fréquence située dans la deuxième bande de fréquences.
- les données de gestion des fréquences, reçues dans la voie descendante, sont exploitées lors de la dite transposition de fréquence pour choisir la fréquence à fournir dans la deuxième bande de fréquences.

2. Procédé selon la revendication 1, caractérisé en ce que les signaux de retour sont transmis au travers du réseau dans la bande de fréquence 20-60 MHz.

3. Procédé selon la revendication 1, caractérisé en ce que les données de gestion des fréquences de retour, reçues dans la voie descendante, sont traitées dans le récepteur d'usager, puis des ordres qui en résultent sont fournis au réseau.

4. Procédé selon la revendication 3, caractérisé en ce que les signaux représentant les dits ordres sont codés sous la forme dite I²C.

5. Procédé selon la revendication 4, caractérisé en ce que des signaux d'horloge I²C sont modulés à une première fréquence pour être transmis du récepteur d'usager vers le système d'antenne, des signaux de données I²C sont modulés à une deuxième fréquence pour être transmis du récepteur d'usager vers le système d'antenne, et des signaux de données I²C sont modulés à une troisième fréquence pour être transmis du système d'antenne vers le récepteur d'usager.

6. Réseau de distribution de signaux de vidéocommunication, comprenant un système d'antenne capable d'émettre des signaux dits de retour vers un satellite dans une première bande de fréquences, à partir de signaux reçus depuis le réseau dans une deuxième bande de fréquence située en haut de la bande des fréquences de télévision utilisée dans le réseau, et comprenant une voie dite descendante destinée à fournir des signaux à une pluralité de récepteurs d'usager et amenant, entre autres, des données pour la gestion des fréquences des signaux de retour, caractérisé en ce qu'il comprend :
- une unité dite complémentaire, jouant le rôle d'interface entre les éléments habituels du réseau et un récepteur d'usager, munie de premiers moyens pour recevoir depuis le réseau et délivrer au récepteur d'usager les signaux de la voie descendante et les données pour la gestion des fréquences, et pour transmettre, depuis un récepteur d'usager vers le réseau, des signaux de retour dont la fréquence est située en dessous de la bande des fréquences de télévision utilisée dans le réseau et des données pour la gestion des fréquences.
- une unité de transposition de fréquences, jouant le rôle d'interface entre les éléments habituels du réseau et le système d'antenne, munie de deuxièmes moyens pour recevoir des signaux de retour dont la fréquence est située en dessous de la bande des fréquences de télévision utilisée dans le réseau, pour soumettre ces signaux de retour à une transposition de fréquence qui les amène dans la deuxième bande de fréquence, et pour délivrer ces signaux de retour, après transposition, au système d'antenne pour être émis par ce système;
- des troisièmes moyens pour transmettre à l'unité de transposition de fréquences des données pour la gestion des fréquences, reçues via le réseau, destinée à permettre aux deuxièmes moyens de choisir la fréquence à utiliser dans la deuxième bande de fréquence.

7. Réseau de distribution de signaux de vidéocommunication selon la revendication 6, caractérisé en ce que les premiers moyens transmettent les signaux de retour dans la bande de fréquence 20-60 MHz.

8. Réseau de distribution de signaux de vidéocommunication selon la revendication 6, caractérisé en ce que l'unité de transposition de fréquences comprend des moyens pour exploiter des données de gestion des fréquences qui lui sont envoyées via le réseau.

9. Réseau de distribution de signaux de vidéocommunication selon la revendication 8, caractérisé en ce que l'unité complémentaire comprend des moyens pour recevoir, moduler, et transmettre vers le réseau, des signaux représentant les dites données de gestion, qui lui sont amenés sous la forme dite I²C, et l'unité de transposition de fréquences comprend des moyens pour recevoir et démoduler les dites données sous la forme I²C.

10. Réseau de distribution de signaux de vidéocommunication selon la revendication 9, caractérisé en ce que l'unité complémentaire comprend des moyens pour moduler à une première fréquence et émettre vers le réseau des signaux d'horloge I²C, l'unité de transposition de fréquences comprend des moyens pour recevoir du réseau et démoduler des signaux d'horloge I²C, l'unité complémentaire comprend des moyens pour moduler à une deuxième fréquence et émettre vers le réseau des signaux de données I²C, l'unité de transposition de fréquences comprend des moyens pour recevoir du réseau et démoduler à cette deuxième fréquence des signaux de données I²C, l'unité de transposition de fréquences comprend des moyens pour moduler à une troisième fréquence et émettre vers le réseau des signaux de données I²C, et l'unité complémentaire comprend des moyens pour recevoir du réseau et démoduler à la troisième fréquence des signaux de données I²C.

11. Réseau de distribution de signaux de vidéocommunication selon la revendication 6, caractérisé en ce que l'unité complémentaire et l'unité de transposition de fréquences fournissent aussi la télé alimentation de l'émetteur.

12. Unité destinée à servir d'interface entre un réseau de distribution de signaux de vidéocommunication et un récepteur d'usager, comprenant des moyens pour recevoir depuis le réseau et délivrer au récepteur d'usager des signaux de voie descendante et des données pour la gestion de fréquences de retour, et pour transmettre, depuis le récepteur d'usager vers le réseau, des signaux de retour dont la fréquence est située en dessous de la bande des fréquences de télévision utilisée dans le réseau et des données pour la gestion des fréquences.

13. Unité de transposition de fréquences, destinée à servir d'interface entre un réseau de vidéocommunication et un système d'antenne, munie de moyens pour recevoir des signaux de retour dont la fréquence est située en dessous de la bande des fréquences de télévision utilisée dans le réseau, pour soumettre ces signaux de retour à une transposition de fréquence qui les amène dans une deuxième bande de fréquence située en haut de la bande des fréquences de télévision utilisée dans le réseau, et pour délivrer ces signaux de retour, après transposition, au système d'antenne pour être émis par ce système.
